(19) Europäisches Patentamt / European Patent Office / Office européen des brevets

(11) **EP 3 225 878 B1**

(12) **EUROPEAN PATENT SPECIFICATION**

(45) Date of publication and mention of the grant of the patent:
**05.06.2019  Bulletin 2019/23**

(51) Int Cl.:
**F16F 15/26** (2006.01)

(21) Application number: **17158179.6**

(22) Date of filing: **27.02.2017**

(54) **IN-LINE FOUR CYLINDER ENGINE**

VIERZYLINDER-REIHENMOTOREN

MOTEUR AVEC QUATRE CYLINDRES EN LIGNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2016  JP 2016057893**

(43) Date of publication of application:
**04.10.2017  Bulletin 2017/40**

(73) Proprietor: **Yamaha Hatsudoki Kabushiki Kaisha Iwata-shi, Shizuoka 438-8501 (JP)**

(72) Inventor: **SANO, Taketoshi Iwata-shi, Shizuoka 438-8501 (JP)**

(74) Representative: **Grünecker Patent- und Rechtsanwälte PartG mbB Leopoldstraße 4 80802 München (DE)**

(56) References cited:
**EP-A1- 1 811 199          EP-A2- 0 284 430**
**DE-A1-102009 058 090    US-A1- 2011 277 720**

**Description**

The present invention relates to an in-line four cylinder engine, and more particularly to an in-line four cylinder engine including a mechanism for reducing vibration caused by a secondary component of an inertia couple based on lateral pressures from the pistons.

Engines include reciprocating engines, for example. A reciprocating engine includes a motion conversion mechanism for converting reciprocating movements of the piston into rotational movements of the crankshaft (hereinafter referred to as piston-crank mechanism).

Reciprocating engines include in-line four cylinder engines. An in-line four cylinder engine includes four cylinders arranged in the axial direction of the crankshaft, where the cylinder axes of the four cylinders are parallel to each other.

In an in-line four cylinder engine, when the pistons in the two cylinders located at the ends of the series of cylinders arranged in the axial direction of the crankshaft are located at the top dead center, the pistons in the other two cylinders are located at the bottom dead center. This reduces vibration caused by the primary component of the inertia force generated as the piston-crank mechanism operates. More specifically, it reduces vibration caused by the primary component of the inertia force due to the reciprocating motion mass of the piston-crank mechanism acting as a translational force as well as vibration caused by the primary component of the same inertia force acting as a couple.

However, an in-line four cylinder engine with the above-described arrangement cannot reduce vibration caused by a secondary component of the inertia force generated as the piston-crank mechanism operates. In view of this, an in-line four cylinder engine includes a balancer mechanism for reducing vibration caused by the secondary component of the inertia force generated as the piston-crank mechanism operates. Such a balancer mechanism is disclosed in JPS567536 A, for example. EP 1 811 199 A1 discloses a secondary vibration generated accompanying reciprocation of a piston of a multi-link variable compression ratio engine can be eliminated effectively, even when the direction of the secondary vibration is inclined relative to a cylinder axis, by inclining the direction of an excitation force generated by a secondary balancer system so that it coincides with the direction of the secondary vibration. The secondary balancer system is formed by supporting balancer weights on a pair of balancer shafts rotating in directions opposite to each other, and by displacing the phases of these balancer weights the direction of the excitation force generated can be inclined so as to coincide with the direction of secondary vibration of the engine.

JPS567536 A discloses an in-line four cylinder engine including a secondary balancer device. According to this publication, the secondary balancer device includes two balancer shafts. The two balancer shafts are positioned parallel to the crankshaft. The two balancer shafts rotates at a rotational speed twice that of the crankshaft. The two balancer shafts rotate in opposite directions. The two balancer shafts are located at different positions measured in the direction in which the cylinder axes of the four cylinders extend. One of the two balancer shafts is located closer to the pistons than the other balancer shaft is. The other balancer shaft rotates in the direction opposite to that in which the crankshaft rotates.

The secondary balancer device of the above publication reduces not only vibration caused by the secondary component of the inertia force generated as the piston-crank mechanism operates acting as a translational force, but also vibration caused by a secondary component of the inertia couple based on the lateral pressures from the pistons (i.e. secondary inertia couple).

[Patent Document 1] JPS567536 A

Moreover, EP 0 284 430 A2 discloses an in-line four cylinder engine comprising all the features of the preamble of claim 1.

In recent years, engines including a crankshaft having a shaft center offset from the cylinder axis have been proposed (such an engine will be hereinafter referred to as offset engine). In an offset engine, as viewed in the axial direction of the crankshaft, the shaft center of the crankshaft is not located on the cylinder axis, and the angle or rotation of the crankshaft found when the piston moves from its top dead center to its bottom dead center is larger than the angle of rotation of the crankshaft found when the piston moves from its bottom dead center to its top dead center. Thus, the expansion time in an offset engine is longer than that in an engine including a crankshaft with a shaft center located on the cylinder axis (hereinafter referred to as non-offset engine). Further, a reduction in piston speed during expansion means an improvement of heat efficiency. In addition, the inclination of the connecting rod found when combustion pressure is high becomes smaller, reducing the lateral pressure from the cylinder from the piston, thereby reducing loss. As a result, an offset engine improves fuel efficiency over a non-offset engine.

As is the case with conventional engines, it is preferable to provide a balancer mechanism in such an offset engine. However, after research and investigation, the present inventor found that it is difficult to reduce vibration caused by the secondary inertia couple based on the lateral pressure from the piston using a conventional balancer mechanism.

It is an object of the present invention to reduce vibration generated by a secondary inertia couple caused by the lateral pressures from the pistons of an offset in-line four cylinder engine. According to the present invention said object is solved by an in-line four cylinder engine having features of the independent claim 1. Preferred embodiments are laid down in the dependent claims.

An in-line four cylinder engine according to an embodiment includes a motion conversion mechanism and a balancer mechanism. The balancer mechanism reduces vibration generated as the motion conversion mechanism operates. The motion conversion mechanism includes a crankshaft, four pistons, and four connecting rods. Each of the four pistons is located within an associated one of four cylinders arranged in an axial direction of the crankshaft. Each of the four connecting rods is swingably connected to an associated one of the four pistons. The four connecting rods are swingably connected to the crankshaft. The crankshaft includes four crankpins. Each of the four crankpins is mounted on an associated one of the four connecting rods. In the motion conversion mechanism, the four cylinders have cylinder axes that are parallel to each other. In the motion conversion mechanism, when two crankpins of the four crankpins located at ends of a series of crankpins arranged in the axial direction of the crankshaft are at predetermined reference positions, the other two crankpins are located on that side of a shaft center of the crankshaft which is opposite to a side with the reference positions. In the motion conversion mechanism, as viewed in the axial direction of the crankshaft, the shaft center of the crankshaft is not located on the cylinder axes of the four cylinders. In the motion conversion mechanism, for each of the four pistons, an angle of rotation of the crankshaft found when the piston moves from a top dead center to a bottom dead center is larger than an angle of rotation of the crankshaft found when the piston moves from the bottom dead center to the top dead center. The balancer mechanism includes a first balancer shaft and a second balancer shaft. The first balancer shaft is positioned parallel to the crankshaft and rotates at a speed twice that at which the crankshaft rotates. The second balancer shaft is positioned parallel to the crankshaft and rotates at a speed twice that at which the crankshaft rotates. The second balancer shaft rotates in a direction opposite to that in which the first balancer shaft rotates. A reference line is established that passes through the shaft center of the crankshaft and is parallel to the cylinder axes of the four cylinders as viewed in the axial direction of the crankshaft. As viewed in the axial direction of the crankshaft, the first balancer shaft is located on a side of the reference line which is opposite to a side with the second balancer shaft. As viewed in the axial direction of the crankshaft, the first balancer shaft is located at a position different from that of the second balancer shaft as measured in a direction in which the reference line extends. The first balancer shaft includes a first unbalancing portion. The first unbalancing portion generates an inertia force as the first balancer shaft rotates. The second balancer shaft includes a second unbalancing portion. The second unbalancing portion generates an inertia force as the second balancer shaft rotates. Each of the crankpins is inserted in a hole formed in the associated connecting rod.

In the above-described in-line four cylinder engine, (1) the distance between the shaft center of the first balancer shaft and the reference line may be different from the distance between the shaft center of the second balancer shaft and the reference line as measured in a direction (i.e. second direction) perpendicular to the direction (i.e. first direction) in which the reference line extends as viewed in the axial direction of the crankshaft so as to reduce vibration generated by a secondary component of an inertia couple based on lateral pressures from the four pistons, or (2) the magnitude of the first unbalancing portion may be different from the magnitude of the second unbalancing portion so as to reduce vibration generated by a secondary component of an inertia couple based on lateral pressures from the four pistons. Or, both (1) and (2) may apply.

FIG. 1 is a left side view of a motorcycle according to an embodiment.
FIG. 2 is a schematic view of the piston-crank mechanism.
FIG. 3 is a schematic view of the internal structure of the engine.
FIG. 4 is a graph illustrating inertia couples in a non-offset engine.
FIG. 5 is a graph illustrating inertia couples in an offset engine.
FIG. 6 is a conceptual diagram of an offset engine.
FIG. 7 is a conceptual diagram illustrating the inertia couple in an offset engine.
FIG. 8 is a conceptual diagram illustrating the relationship between the inertia forces generated as the balancer shafts rotate when the crankshaft has rotated by 45° from the reference position ($\theta=0°$).
FIG. 9 is a conceptual diagram illustrating the relationship between the inertia forces generated as the balancer shafts rotate when the crankshaft has rotated by 45° from the reference position ($\theta=0°$), where the balancer shafts are arranged differently from those in FIG. 8.

In recent years, offset engines have been proposed to improve fuel efficiency. Similar to conventional engines, it is preferable to provide a balancer mechanism in an offset engine. More specifically, in an offset in-line four cylinder engine, it is preferable to provide a balancer mechanism to reduce vibration caused by the secondary component of the inertia force generated as the piston-crank mechanism operates. However, after research and investigation, the present inventor found that, in a conventional balancer mechanism, it is difficult to reduce part of vibration caused by the secondary component of the inertia force generated as the piston-crank mechanism operates, i.e. vibration caused by the secondary inertia couple based on the lateral pressures from the pistons.

With this in mind, the present inventor investigated into the secondary inertia couple caused by the lateral pressures from the pistons. The present inventor found that, in an offset engine, the phase of the secondary inertia couple caused by the lateral pressures from the pistons is displaced from that in a non-offset engine. The present invention was made based on this finding.

A straddled vehicle according to an embodiment will now be described with reference to the drawings. In the present embodiment, a motorcycle will be described as an example of the straddled vehicle. The same or corresponding parts throughout the drawings will be labeled with the same characters, and their description will not be repeated.

1. Overall Construction of Vehicle

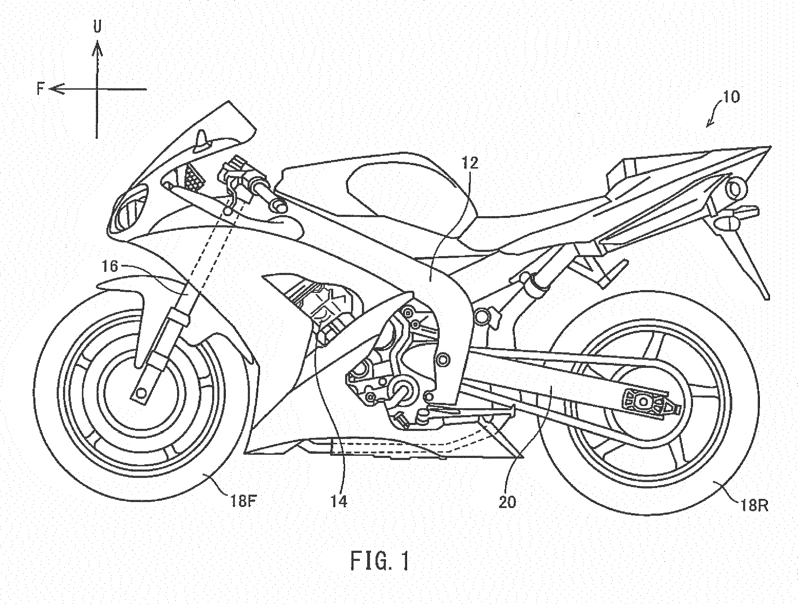

FIG. 1 is a left side view of a motorcycle 10 according to an embodiment. Referring to FIG. 1, the motorcycle 10 includes a vehicle body frame 12 and an engine 14.

A front fork 16 is attached to the front portion of the vehicle body frame 12. The front fork 16 rotatably supports a front wheel 18F.

A rear arm 20 is attached to the vehicle body frame 12. The rear arm 20 rotatably supports a rear wheel 18R.

An engine 14 is supported by the vehicle body frame 12. As power from the engine 14 is transmitted to the rear wheel 18R, the rear wheel 18R rotates.

2. Engine

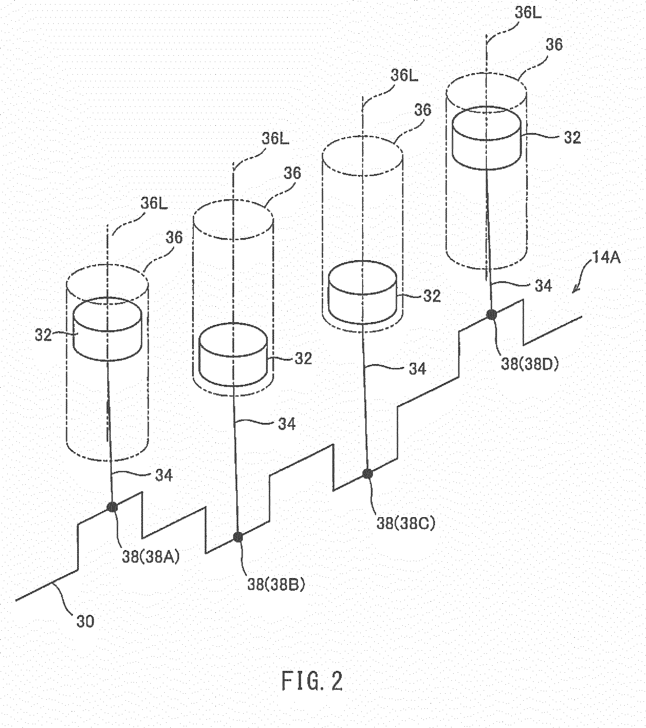

The engine 14 is an in-line four cylinder engine. The engine 14 includes four cylinders arranged in the left-to-right direction with respect to the vehicle (i.e. direction perpendicular to the paper surface of FIG. 1). The engine 14 includes a piston-crank mechanism 14A (see FIG. 2).

2-1 Piston-Crank Mechanism

The piston-crank mechanism 14A will be described with reference to FIG. 2. The piston-crank mechanism 14A includes a crankshaft 30, four pistons 32, and four connecting rods 34.

Each of the four pistons 32 is located within the associated one of the four cylinders 36 arranged in the axial direction of the crankshaft 30. Each piston 32 reciprocates on the central axis of the associated cylinder 36 (hereinafter referred to as cylinder axis 36L). The cylinder axes 36L of the four cylinders 36 are parallel to each other. Each of the four connecting rods 34 is swingably connected to the associated one of the four pistons 32. The four connecting rods 34 are swingably connected to the crankshaft 30. The crankshaft 30 includes four crankpins 38. Each of the four crankpins 38 is mounted on the associated one of the four connecting rods 34. More specifically, a crankpin 38 is inserted into a hole formed in the associated connecting rod 34. Thus, each crankpin 38 swingably supports the associated connecting rod 34.

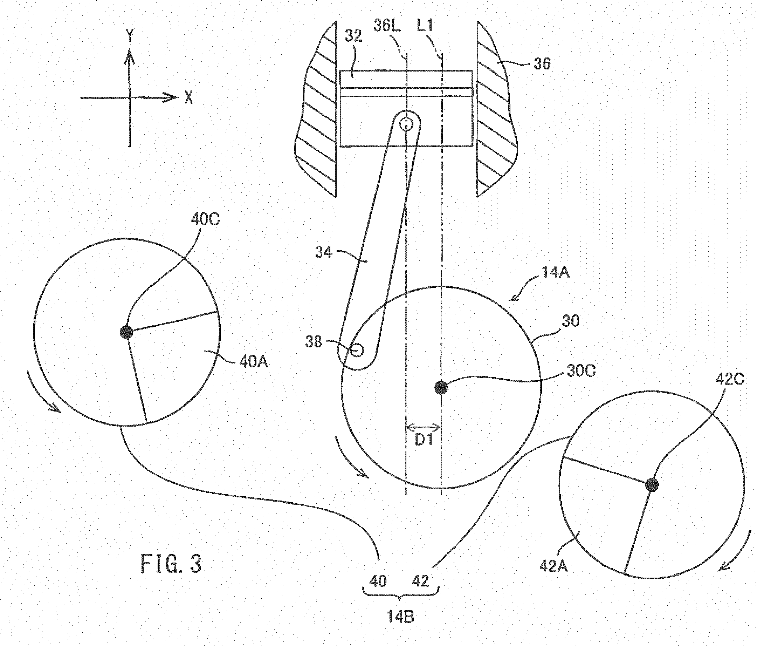

In the piston-crank mechanism 14A, when the two crankpins 38 located at the ends of the series of crankpins arranged in the axial direction of the crankshaft 30 (hereinafter referred to as crankpins 38A and 38D) are located at reference positions, the other two crankpins 38 (hereinafter referred to as crankpins 38B and 38C) are located on that side of the shaft center 30C of the crankshaft 30 (see FIG. 3) which is opposite to the side with the reference positions.

The reference positions will be described with reference to FIG. 3. A reference position is one of the two intersection points of the locus of the crankpin 38 formed as the crankshaft 30 rotates and a reference line L1, the one intersection point being closer to the piston 32. The reference line L1 is a straight line that passes through the shaft center 30C of the crankshaft 30 and is parallel to the cylinder axis 36L of the associated one of the four cylinders 36 as viewed in the axial direction of the crankshaft 30. The position on that side of the shaft center 30C of the crankshaft 30 which is opposite to the reference position is that one of the intersection points which is farther from the piston 32 than the reference position is.

In the piston-crank mechanism 14A, reciprocating movements of the piston 32 are converted into rotating movements of the crankshaft 30. That is, the piston-crank mechanism 14A works as a motion conversion mechanism.

In the piston-crank mechanism 14A, as shown in FIG. 3, the shaft center 30C of the crankshaft 30 is not located on the cylinder axis 36L as viewed in the axial direction of the crankshaft 30. Thus, the angle of rotation of the crankshaft 30 found when the piston 32 moves from its top dead center to its bottom dead center is larger than the angle of rotation of the crankshaft 30 found when the piston 32 moves from the bottom dead center to the top dead center. That is, the engine 14 is an offset engine.

Although FIG. 3 only shows the positional relationship between the cylinder axis 36L of one cylinder 36 and the shaft center 30C of the crankshaft 30, in the present embodiment, the crankshaft 30C is in the positional relationship shown in FIG. 3 with respect to any one of the cylinder axes 36L. That is, the shaft center 30C of the crankshaft 30 is distant from each cylinder axis 36L by distance D1 as measured in the direction perpendicular to the cylinder axis 36L (hereinafter referred to as x-direction).

2-2 Balancer Mechanism

As shown in FIG. 3, the engine 14 includes, in addition to the piston-crank mechanism 14A, a balancer mechanism 14B. The balancer mechanism 14B is a double-shaft balancer mechanism. The balancer mechanism 14B includes a balancer shaft 40 and a balancer shaft 42.

The balancer shaft 40 is positioned parallel to the crankshaft 30. The balancer shaft 40 has a shaft center 40C. The balancer shaft 40 is rotatable about the shaft center 40C. The balancer shaft 40 may rotate in the same direction as the crankshaft 30, or rotate in the direction opposite to that of the crankshaft 30. In the implementation shown in FIG. 3, the balancer shaft 40 rotates in the same direction as the crankshaft 30. The balancer shaft 40 rotates at a speed twice that of the crankshaft 30. For example, the balancer shaft 40 may rotate together with the crankshaft 30 as a gear provided on the balancer shaft 40 engages with a gear provided on the crankshaft 30 via a gear provided on an intermediate shaft provided in between, not shown. Alternatively, the balancer shaft 40 may rotate together with the crankshaft 30 using a chain wound around a sprocket provided on the balancer shaft 40 and a sprocket provided on the crankshaft 30, for example.

The balancer shaft 40 includes an unbalancing portion 40A. The unbalancing portion 40A generates an inertia force as the balancer shaft 40 rotates.

The balancer shaft 42 is positioned parallel to the crankshaft 30. The balancer shaft 42 has a shaft center 42C. The balancer shaft 42 is rotatable about the shaft center 42C. The balancer shaft 42 rotates in the direction opposite to that of the balancer shaft 40. In the implementation shown in FIG. 3, the balancer shaft 42 rotates in the direction opposite to that of the crankshaft 30. The balancer shaft 42 rotates at a speed twice that of the crankshaft 30. The balancer shaft 42 may rotate together with the crankshaft 30 as a gear provided on the balancer shaft 42 engages with a gear provided on the crankshaft 30, for example.

The balancer shaft 42 includes an unbalancing portion 42A. The unbalancing portion 42A generates an inertia force as the balancer shaft 42 rotates.

The balancer shaft 42 is located on that side of the reference line L1 which is opposite to the side with the balancer shaft 40. The balancer shaft 42 is located at a position different from that of the balancer shaft 40 as measured in the direction in which the reference line L1 extends, i.e. the direction in which the cylinder axis 36L extends (hereinafter referred to as y-direction). That is, the shaft center 42C of the balancer shaft 42 and the shaft center 40C of the balancer shaft 40 are located at different positions as measured in the y-direction.

2-3 Vibration Caused by Primary Inertia Force

The engine 14 includes the piston-crank mechanism 14A. In the piston-crank mechanism 14A, when the two crankpins 38A and 38D located at the ends of the series of crankpins arranged in the axial direction of the crankshaft 30 are at their reference positions, the other two crankpins 38B and 38C are located on that side of the shaft center 30C of the crankshaft 30 which is opposite to the side with the reference positions. This reduces vibration caused by the primary component of the inertia force due to the reciprocating motion mass of the piston-crank mechanism 14A (i.e. primary inertia force).

2-4 Vibration Caused by Secondary Inertia Couple Based on Lateral Pressures from Pistons

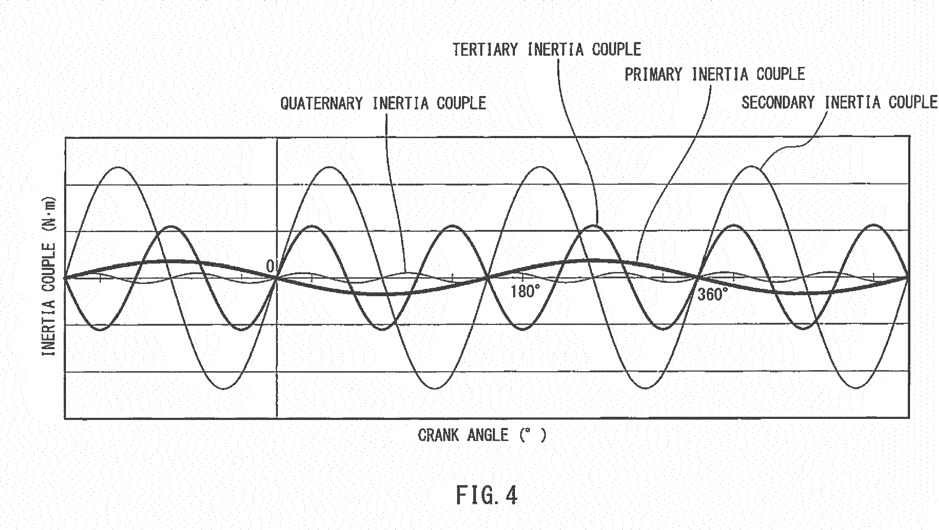

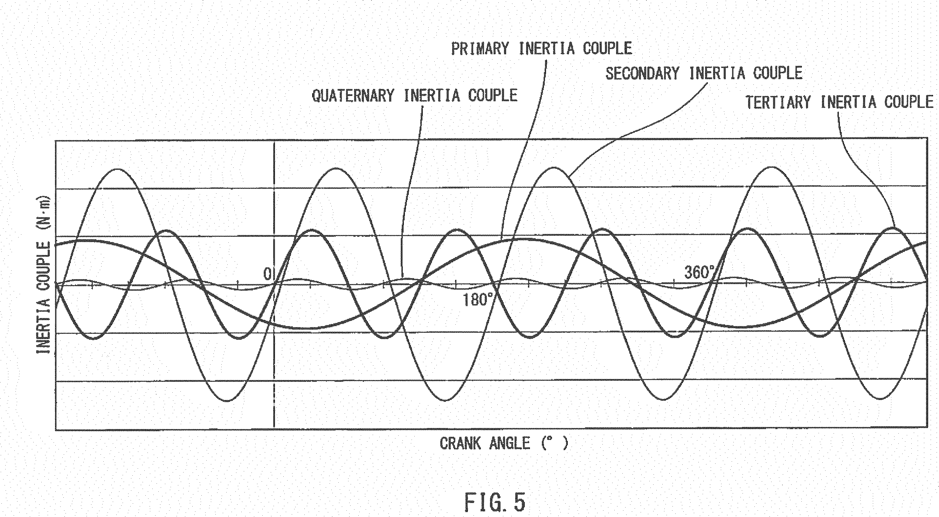

FIG. 4 illustrates inertia couples due to the lateral pressure from a piston in a non-offset engine. FIG. 5 illustrates inertia couples due to the lateral pressure from a piston in an offset engine, where the offset quantity is about 1/6 of the crank radius. As shown in FIGS. 4 and 5, in the crank offset engine, the phase of the secondary inertia couple due to the lateral pressure from the piston is displaced from that in the non-offset engine. The reasons for this are as follows.

The secondary inertia couple due to the lateral pressure from the pistons is caused by the primary inertia force due to the reciprocating motion mass (i.e. a translational force) and the inclination of the connecting rod. In the offset engine, the phase of the primary inertia force and the phase of the angle of inclination of the connecting rod are displaced. As such, the phase of the secondary inertia couple is also displaced.

As discussed above, the engine 14 is an offset engine. Thus, in the engine 14, the phase of the secondary inertia couple caused by the lateral pressures from the pistons is displaced.

The engine 14 includes the balancer mechanism 14B. As such, as discussed above, vibration caused by the secondary inertia couple based on the lateral pressures from the pistons is reduced even though the phase of the secondary inertia couple caused by the lateral pressures from the pistons is displaced.

Settings for the balancer mechanism 14B for reducing vibration caused by the secondary inertia couple based on the lateral pressures from the pistons will be described. The balancer mechanism 14B is set by the following Steps 1 and 2.

Step 1: balancing the inertia force generated as the balancer mechanism 14B operates with the secondary component of the inertia force due to the reciprocating motion mass of the piston-crank mechanism 14A (i.e. a translational force); and

Step 2: balancing the inertia force generated as the balancer mechanism 14B operates with the secondary inertia couple caused by the lateral pressures from the pistons.

Step 1

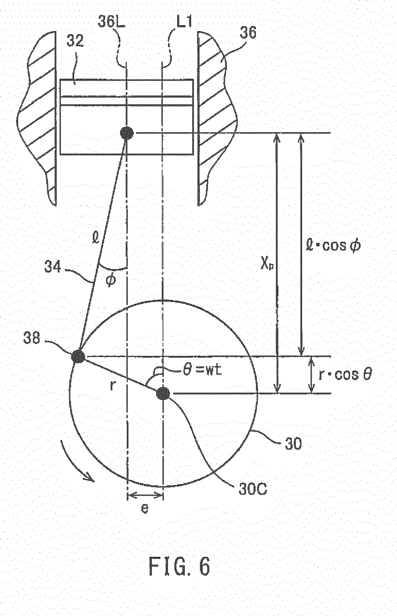

First, the secondary component of the inertia force due to the reciprocating motion mass in an offset engine will be described with reference to FIG. 6. Referring to FIG. 6, the relationship illustrated by the following equation of Formula 1 is established for the offset quantity e, the length of the connecting rod 1, the crank radius r, the angle of crank rotation $\theta$, and the swing angle of the connecting rod $\varphi$.
[Formula 1]

$$e + l \cdot \sin\phi = r \cdot \sin\theta \qquad (1)$$

The offset quantity e is the sum of: (A) the offset quantity of the shaft center of the crankshaft relative to a straight line passing through the center of a cylinder as measured in the radial direction and extending in the axial direction of the cylinder (i.e. cylinder axis); and (B) the offset quantity of the shaft center of the piston pin relative to this straight line. In the following description, the offset quantity e is the offset quantity of (A) only. Accordingly, FIG. 6 to which reference will be made illustrates the offset quantity e that is the offset quantity of (A) only. In an engine in which the shaft center of the crankshaft is located on the cylinder axis, suitably the offset quantity e=0. The angle of crank rotation $\theta$ is measured relative to the value obtained when the crankpin is at the reference position.

Rearranging the above equation of Formula 1 gives the following equation of Formula 2.
[Formula 2]

$$\sin\phi = \frac{r}{l} \cdot \sin\theta - \frac{e}{l} \qquad (2)$$

Due to the Pythagorean proposition, the following equation of Formula 3 is established.
[Formula 3]

$$\sin^2\phi + \cos^2\phi = 1 \qquad (3)$$

From the above equations of Formulas 2 and 3, the following equation of Formula 4 is derived.
[Formula 4]

$$\cos\phi = \sqrt{1 - \left(\frac{r}{l} \cdot \sin\theta - \frac{e}{l}\right)^2} \qquad (4)$$

The above equation of Formula 4 is developed using the binomial theorem under the following conditions of Formulas 5 to 8.
[Formula 5]

$$(a+b)^n = \sum_{k=0}^{n} \frac{n!}{k!\,(n-k)!} \cdot a^{n-k} \cdot b^k = a^n + n \cdot a^{n-1} \cdot b + \frac{n\,(n-1)}{2 \cdot 1} \cdot a^{n-2} \cdot b^2 + \cdots \quad (5)$$

[Formula 6]

$$a = 1 \quad (6)$$

[Formula 7]

$$b = -\left(\frac{r}{l} \cdot \sin\theta - \frac{e}{l}\right)^2 \qquad (7)$$

[Formula 8]

$$n = \frac{1}{2} \qquad (8)$$

As a result, the above equation of Formula 4 becomes as follows.
[Formula 9]

$$\cos \phi = 1 - \frac{1}{2} \cdot \left( \frac{r}{l} \cdot \sin \theta - \frac{e}{l} \right)^2 - \frac{1}{8} \cdot \left( \frac{r}{l} \cdot \sin \theta - \frac{e}{l} \right)^4 + \cdots \quad (9)$$

The first to third terms are extracted from the above equation of Formula 9 and the second and third terms are developed and tidied up, which gives the following equation of Formula 10.

[Formula 10]

$$
\cos\phi \approx 1 - \frac{1}{2}\left(\frac{e}{l}\right)^2 - \frac{1}{8}\left(\frac{e}{l}\right)^4 + \frac{r\cdot e}{l^2}\cdot\sin\theta + \frac{r\cdot e^3}{2l^4}\cdot\sin\theta + \frac{r^2}{2l^2}\cdot\sin^2\theta + \frac{3r^2\cdot e^2}{4l^4}\cdot\sin^2\theta + \frac{r^3\cdot e}{2l^4}\cdot\sin^2\theta + \frac{r^3\cdot e}{2l^4}\cdot\sin^3\theta + \frac{r^4}{8l^4}\cdot\sin^4\theta \quad (10)
$$

Referring to FIG. 6, the displacement $x_p$ of the piston 32 is expressed by the following equation of Formula 11.
[Formula 11]

$$
x_p = r\cdot\cos\theta + l\cdot\cos\phi \qquad (11)
$$

Calculating the displacement $x_p$ of the piston 32 using the above equations of Formulas 10 and 11 gives the following equation of Formula 12.

[Formula 12]

$$x_p \approx r \cdot \left\{ \left( \frac{1}{r} - \frac{e^2}{2l \cdot r} - \frac{e^4}{8l^3 \cdot r} \right) + \cos\theta + \left( \frac{e}{l} + \frac{e^3}{2l^3} \right) \cdot \sin\theta - \frac{r}{2l} \cdot \left( 1 + \frac{3e^2}{2l^2} \right) \cdot \sin^2\theta - \frac{r^2 \cdot e}{2l^3} \cdot \sin^3\theta - \frac{r^3}{8l^3} \cdot \sin^4\theta \right\} \quad (12)$$

Tidying up the above equation of Formula 12 using the product-sum formula of trigonometric functions gives the following equation of Formula 13.
[Formula 13]

$$
\begin{aligned}
x_p \approx\; & r \cdot \left( \frac{1}{r} - \frac{e^2}{2l \cdot r} + \frac{e^4}{8l^3 \cdot r} + \frac{3r \cdot e^2}{4l} - \frac{3r^3}{64l^3} \right) \\
& + r \cdot \sqrt{1 + \left( \frac{e}{l} + \frac{3r^2 \cdot e}{8l^3} + \frac{e^3}{2l^3} \right)^2} \cdot \cos\left( \theta - \tan^{-1}\left( \frac{8l^2 \cdot e + 3r^2 \cdot e + 4e^3}{8l^3} \right) \right) \\
& + r \cdot \left( \frac{r}{4l} + \frac{3r^3}{16l^3} + \frac{3r \cdot e^2}{8l^3} \right) \cdot \cos 2\theta - r \cdot \frac{r^2 \cdot e}{8l^3} \cdot \sin 3\theta - r \cdot \frac{r^3}{64l^3} \cdot \cos 4\theta
\end{aligned}
\tag{13}
$$

The velocity of the piston 32, $v_p$, may be determined by differentiating the displacement $x_p$ with respect to time. If $\theta=\omega t$ in the above equation of Formula 13, the velocity $v_p$ is represented by the following equation of Formula 14.
[Formula 14]

$$v_p \approx -r\omega \cdot \sqrt{1 + \left(\frac{e}{1} + \frac{3r^2 \cdot e}{8l^3} + \frac{e^3}{2l^3}\right)^2} \cdot \sin\left(\omega t - \tan^{-1}\left(\frac{8l^2 \cdot e + 3r^2 \cdot e + 4e^3}{8l^3}\right)\right)$$

$$-r\omega \cdot \left(\frac{r}{2l} + \frac{r^3}{8l^3} + \frac{3r \cdot e^2}{4l^3}\right) \cdot \sin 2\omega t$$

$$-r\omega \cdot \frac{3r^2 \cdot e}{8l^3} \cdot \cos 3\omega t + r\omega \cdot \frac{r^3}{16l^3} \cdot \sin 4\omega t \qquad (14)$$

The acceleration of the piston 32, $a_p$, may be determined by differentiating the velocity $v_p$ with respect to time. Differentiating the above equation of Formula 14 with respect to time gives the following equation of Formula 15.

[Formula 15]

$$a_p \approx -r\omega^2 \cdot \sqrt{1+\left(\frac{e}{l}+\frac{3r^2 \cdot e}{8l^3}+\frac{e^3}{2l^3}\right)^2} \cdot \cos\left(\omega t - \tan^{-1}\left(\frac{8l^2 \cdot e + 3r^2 \cdot e + 4e^3}{8l^3}\right)\right)$$

$$-r\omega^2 \cdot \left(\frac{r}{l}+\frac{3r^3}{4l^3}+\frac{3r \cdot e^2}{2l^3}\right) \cdot \cos 2\omega t$$

$$+r\omega^2 \cdot \frac{9r^2 \cdot e}{8l^3} \cdot \sin 3\omega t + r\omega^2 \cdot \frac{r^3}{4l^3} \cdot \cos 4\omega t \qquad (15)$$

The inertia force is obtained by multiplying mass by acceleration. Based on the above equation of Formula 15, the inertia force due to the reciprocating motion mass is represented by the following equation of Formula 16.
[Formula 16]

$$F_2 = mr\omega^2 \approx mr\omega^2 \left[ 1 + \left(\frac{e}{l} + \frac{3r^2 \cdot e}{8l^3} + \frac{e^3}{2l^3}\right)^2 \cdot \cos\left(\omega t - \tan^{-1}\left(\frac{8l^2 \cdot e + 3r^2 \cdot e + 4e^3}{8l^3}\right)\right) \right.$$
$$\left. + \left(\frac{r}{l} + \frac{r^3}{4l^3} + \frac{3r \cdot e^2}{2l^3}\right) \cdot \cos 2\omega t \right.$$
$$\left. + \frac{9r^2 \cdot e}{8l^3} \cdot \sin 3\omega t - \frac{r^3}{4l^3} \cdot \cos 4\omega t \right] \quad (16)$$

Based on the above equation of Formula 16, the secondary component of the inertia force due to the reciprocating motion mass (i.e. secondary inertia force) can be expressed by the following equation of Formula 17.
[Formula 17]

$$F2 = \left(\frac{r}{l} + \frac{r^3}{4l^3} + \frac{3r \cdot e^2}{2l^3}\right) \cdot mr\omega^2 \cdot \cos 2\omega t \quad (17)$$

The above equation of Formula 17 is tidied up using the equations of Formulas 18 and 19. R in the equation of Formula 18 below denotes the rotational speed of the crankshaft 30 (i.e. number of rotations per minute).
[Formula 18]

$$\omega = 2\pi \cdot \frac{R}{60} \qquad (18)$$

[Formula 19]

$$\theta = \omega t \qquad (19)$$

As a result, the above equation of the Formula 17 is expressed by the following equation of Formula 20.
[Formula 20]

$$F2 = \left(\frac{r}{l} + \frac{r^3}{4l^3} + \frac{3r \cdot e^2}{2l^3}\right) \cdot mr\left(2\pi \cdot \frac{R}{60}\right)^2 \cdot \cos 2\theta \qquad (20)$$

In the engine 14, when the two crankpins 38A and 38D located at the ends of the series of crankpins arranged in the axial direction of the crankshaft 30 are at their reference positions, the other two crankpins 38B and 38C are located on that side of the shaft center 30C of the crankshaft 30 which is opposite to the side with the reference positions. As such, the secondary inertia force due to a reciprocating motion mass including the piston 32A, the secondary inertia force due to a reciprocating motion mass including the piston 32B, the secondary inertia force due to a reciprocating motion mass including the piston 32C and the secondary inertia force due to a reciprocating motion mass including the piston 32D have the same phase. Thus, the secondary inertia force generated in the engine 14 (i.e. secondary inertia force due to the reciprocating motion mass) can be expressed by the following equation of Formula 21.
[Formula 21]

$$F = 4\left(\frac{r}{l} + \frac{r^3}{4l^3} + \frac{3r \cdot e^2}{2l^3}\right) \cdot mr\left(2\pi \cdot \frac{R}{60}\right)^2 \cdot \cos 2\theta \qquad (21)$$

The inertia force generated as the balancer shaft 40 rotates will be designated by Ua, and the inertia force generated as the balancer shaft 42 rotates will be designated by Ub. The following equations of Formulas 22 and 23 are suitably satisfied in order that these inertia forces Ua and Ub are in balance with the secondary inertia force F generated in the engine 14, where θ=0.
[Formula 22]

$$Ua + Ub = F \qquad (22)$$

[Formula 23]

$$Ua = Ub \qquad (23)$$

The balancer shafts 40 and 42 rotate at a speed twice that of the crankshaft 30. Ua and Ub can be expressed by the following equation of Formula 24, where kb is the unbalancing quantity (i.e. coefficient indicating the magnitude of an unbalancing portion) for each of the balancer shafts 40 and 42.
[Formula 24]

$$Ua = Ub = kb \cdot mr \left( 2\pi \cdot \frac{2R}{60} \right)^2 \qquad (24)$$

The following equation of Formula 25 can be derived from the above equations of Formulas 22 and 23.
[Formula 25]

$$Ua = Ub = \frac{F}{2} \qquad (25)$$

Tidying up the above equation of Formula 25 using the above equations of Formulas 21 and 24 gives the following equation of Formula 26.
[Formula 26]

$$kb \cdot mr \left(2\pi \cdot \frac{2R}{60}\right)^2 = 2\left(\frac{r}{l} + \frac{r^3}{4\,l^3} + \frac{3\,r \cdot e^2}{2\,l^3}\right) \cdot mr \left(2\pi \cdot \frac{R}{60}\right)^2 \qquad (26)$$

Tidying up the above equation of Formula 26 gives the following equation of Formula 27.
[Formula 27]

$$k\,b = \frac{1}{2}\left(\frac{r}{l} + \frac{r^3}{4\,l^3} + \frac{3\,r \cdot e^2}{2\,l^3}\right) \qquad (27)$$

Step 1 may be performed by setting the various parameters so as to satisfy the above equation of Formula 27.

Step 2

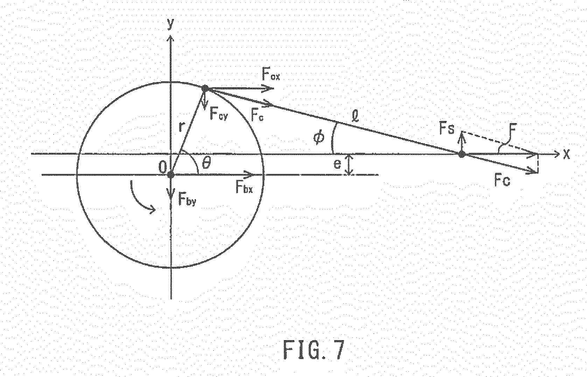

First, the inertia couple will be described with reference to FIG. 7. In FIG. 7, the y-direction in FIG. 3 is shown as the x-direction and the -x-direction in FIG. 3 is shown as the y-direction.

Referring to FIG. 7, the inertia force F acting on the position of a piston 32 (more specifically, the position of its piston pin) can be resolved into the force Fc acting on the connecting rod 34 and the force Fs acting on the side wall of the cylinder 36. The relationships illustrated by the following equations of Formulas 28 and 29 exist between the forces Fc and F and between the forces Fs and F.

[Formula 28]

$$F_c = \frac{F}{\cos\phi} \qquad (28)$$

[Formula 29]

$$F_s = F_c \cdot \sin\phi = F \cdot \tan\phi \qquad (29)$$

The force acting on the crankshaft 30 can be resolved into a component in the x-direction, Fbx, and a component in the y-direction, Fby, as shown in FIG. 7. Fbx and Fby are determined by the following equations.

[Formula 30]

$$F_{bx} = F_{cx} = F_c \cdot \cos\phi = F \qquad (30)$$

[Formula 31]

$$F_{by} = F_{cy} = -F_c \cdot \sin\phi = -F \cdot \tan\phi = -F_s \qquad (31)$$

Referring to FIG. 7, the forces Fs and Fby form a couple. As will be apparent from the above equations of Formulas 30 and 31, the above couple is caused by the inertia force acting on the piston 32. Such an inertia force will be hereinafter referred to as inertia couple. The inertia couple Mrz can be determined by the following equation.

[Formula 32]

$$Mrz = F \cdot \tan\phi \, (r \cdot \cos\theta + l \cdot \cos\phi) \qquad (32)$$

Tidying up the right side of the above equation of Formula 32 gives the following equation.

[Formula 33]

$$M_{rz} = F \cdot (r \cdot \cos\theta \cdot \sin\phi + l \cdot \sin\phi \cdot \cos\phi) \cdot \frac{1}{\cos\phi} \quad (33)$$

Referring to FIG. 7, the following equation is derived.

[Formula 34]

$$l \cdot \sin\phi = r \cdot \sin\theta - e \quad (34)$$

Tidying up the above equation of Formula 33 using the above equation of Formula 34 gives the following equation.

[Formula 35]

$$Mrz = F \cdot r \cdot \frac{\sin(\theta + \phi)}{\cos\phi} - F \cdot e \quad\quad (35)$$

Referring to FIG. 7, the position $x_p$ of the piston 32 is represented by the above equation of Formula 11.

Differentiating the above position $x_p$ with respect to time t where $\theta=\omega t$ and $\varphi$ is a function of time t (i.e. $\varphi=\varphi(t)$) gives the following equation.

[Formula 36]

$$v_p = \frac{dx_p}{dt} = -(r \cdot \omega \cdot \sin\theta + l \cdot \phi' \cdot \sin\phi) \quad\quad (36)$$

Differentiating both sides of the above equation of Formula 34 with respect to time t gives the following equation.

[Formula 37]

$$l \cdot \phi' \cdot \cos\phi = r \cdot \omega \cdot \cos\theta \quad\quad (37)$$

Tidying up the above equation of Formula 37 gives the following equation.

[Formula 38]

$$l \cdot \phi' = \frac{r \cdot \omega \cdot \cos\theta}{\cos\phi} \quad\quad (38)$$

Tidying up the above equation of Formula 36 using the above equation of Formula 38 gives the following equation.

[Formula 39]

$$v_p = -r \cdot \omega \cdot \frac{\sin(\theta + \phi)}{\cos\phi} \quad\quad (39)$$

Tidying up the above equation of Formula 39 gives the following equation.

[Formula 40]

$$r \cdot \frac{\sin(\theta + \phi)}{\cos\phi} = -\frac{v_p}{\omega} \qquad (40)$$

Tidying up the above equation of Formula 35 using the above equation of Formula 40 gives the following equation.
[Formula 41]

$$Mrz = -F \cdot \left(\frac{v_p}{\omega} + e\right) \qquad (41)$$

Using the above equation of Formula 15 to express the inertia force $F_p$ due to the reciprocating motion mass gives the following equation.
[Formula 42]

$$F_p = -m \cdot a_p$$

$$\approx m \cdot r \cdot \omega^2 \cdot \sqrt{1 + \left(\frac{e}{l} + \frac{3r^2 \cdot e}{8l^3} + \frac{e^3}{2l^3}\right)^2} \cdot \cos\left(\omega t - \tan^{-1}\left(\frac{8l^2 \cdot e + 3r^2 \cdot e + 4e^3}{8l^3}\right)\right)$$

$$+ m \cdot r \cdot \omega^2 \cdot \left(\frac{r^3}{4l^3} + \frac{3r \cdot e^2}{2l^3}\right) \cdot \cos 2\omega t$$

$$- m \cdot r \cdot \omega^2 \cdot \frac{9r^2 \cdot e}{8l^3} \cdot \sin 3\omega t - m \cdot r \cdot \omega^2 \cdot \frac{r^3}{4l^3} \cdot \cos 4\omega t \qquad (42)$$

The velocity $v_p$ of the piston 32 is expressed by the above equation of Formula 14.
The symbols are defined as follows.

[Formula 43]

$$\lambda = \frac{1}{r} \qquad (4\,3)$$

[Formula 44]

$$\xi = \frac{e}{r} \qquad (4\,4)$$

[Formula 45]

$$\varepsilon = \sqrt{1 + \left(\frac{e}{l} + \frac{3\,r^2 \cdot e}{8\,l^3} + \frac{e^3}{2\,l^3}\right)^2} \qquad (4\,5)$$

[Formula 46]

$$\tau = \tan^{-1}\left(\frac{8\,l^2 \cdot e + 3\,r^2 \cdot e + 4\,e^3}{8\,l^3}\right) \qquad (4\,6)$$

[Formula 47]

$$\mu = \frac{r}{l} + \frac{r^3}{4\,l^3} + \frac{3\,r \cdot e^2}{2\,l^3} \qquad (4\,7)$$

[Formula 48]

$$\eta = \frac{9\,r^2 \cdot e}{8\,l^3} \qquad (4\,8)$$

The following relationship is established between $\varepsilon$ and $\tau$ defined by the above equations of Formulas 45 and 46.
[Formula 49]

$$\varepsilon \cdot \cos \tau = 1 \qquad (49)$$

[Formula 50]

$$\varepsilon \cdot \sin \tau = \tan \tau = \sqrt{\varepsilon^2 - 1} = \frac{e}{l} + \frac{3r^2 \cdot e}{8l^3} + \frac{e^3}{2l^3} \qquad (50)$$

Tidying up the equation for the inertia couple Mrz using the above equations of Formulas 43 to 50 gives the following equation.
[Formula 51]

$$\frac{Mrz}{m \cdot r^2 \cdot \omega^2} = \frac{F}{m \cdot r^2 \cdot \omega^2}\left(\frac{v}{\omega} + e\right) = \frac{F}{m \cdot r \cdot \omega^2}\left(\frac{e}{r} - \frac{v}{r \cdot \omega}\right)$$

$$\approx \{\varepsilon \cdot \cos(\omega t - \tau) + \mu \cdot \cos 2\omega t - \eta \cdot \sin 3\omega t - \frac{1}{4\lambda^3} \cdot \cos 4\omega t\}$$

$$\cdot \{-\xi + \varepsilon \cdot \sin(\omega t - \tau) + \frac{\mu}{2} \cdot \sin 2\omega t + \frac{\eta}{3} \cdot \cos 3\omega t - \frac{1}{16\lambda^3} \cdot \sin 4\omega t\} \qquad (51)$$

Developing the above equation of Formula 51 and tidying up using the product-sum formula of trigonometric functions gives the following equation.

[Formula 52]

$$
\begin{aligned}
\frac{Mrz}{m \cdot r^2 \cdot \omega^2} \approx\;
& \frac{\varepsilon \cdot \mu}{4} \cdot \sin(\omega t + \tau) - \left(\frac{\mu \cdot \eta}{12} + \frac{\eta^3}{96\lambda^3}\right) \cdot \cos\omega t - \varepsilon \cdot \xi \cdot \cos(\omega t - \tau) \\
& + \frac{\varepsilon^2}{2} \cdot \sin(2\omega t - 2\tau) + \frac{\mu^3}{32\lambda^3} \cdot \sin 2\omega t - \frac{\varepsilon \cdot \eta}{3} \cdot \cos(2\omega t + \tau) - \xi \cdot \mu \cdot \cos 2\omega t \\
& + \frac{3\varepsilon \cdot \mu}{4} \cdot \sin(3\omega t - \tau) + \frac{3\varepsilon \cdot \mu}{32\lambda^3} \cdot \sin(3\omega t + \tau) + \xi \cdot \eta \cdot \sin 3\omega t \\
& + \frac{\mu^2}{4} \cdot \sin 4\omega t + \frac{2\varepsilon \cdot \eta}{3} \cdot \cos(4\omega t - \tau) + \frac{\xi}{4\lambda^3} \cdot \cos 4\omega t \\
& + \frac{5\varepsilon}{32\lambda^3} \cdot \sin(5\omega t - \tau) + \frac{5\mu \cdot \eta}{12} \cdot \cos 5\omega t - \left(\frac{\eta^2}{6} + \frac{3\mu^3}{32\lambda^3}\right) \cdot \sin 6\omega t \\
& + \frac{7\eta}{96\lambda^3} \cdot \cos 7\omega t + \frac{1}{128\lambda^6} \cdot \sin 8\omega t
\end{aligned}
\tag{52}
$$

Expressing $\mu$ using $\lambda$ and $\xi$ gives the following equation.

[Formula 53]

$$\mu = \frac{1}{\lambda} + \frac{1}{4\lambda^3} + \frac{3\xi^2}{2\lambda^3} \qquad (53)$$

Expressing $\eta$ using $\lambda$ and $\xi$ gives the following equation.
[Formula 54]

$$\eta = \frac{9\xi}{8\lambda^3} \qquad (54)$$

The above equation of Formula 52 is tidied up using the above equations of Formulas 53 and 54. As a result, the secondary component is expressed by the following equation.
[Formula 55]

$$
\begin{aligned}
Mrz2 &= \frac{\varepsilon^2}{2} \cdot m \cdot r^2 \cdot \omega^2 \cdot \sin(2\omega t - 2\tau) - \left(\frac{\xi}{\lambda} + \frac{\xi^3}{4\lambda^3} + \frac{3\xi^3}{2\lambda^3}\right) \cdot \cos 2\omega t \\
&\quad \frac{3\varepsilon \cdot \xi}{8\lambda^3} \cdot \cos(2\omega t + \tau) + \left(\frac{1}{32\lambda^4} + \frac{1}{128\lambda^6} + \frac{3\xi^2}{64\lambda^6}\right) \cdot \sin 2\omega t
\end{aligned}
\tag{55}
$$

The above equation of Formula 55 is tidied up using the trigonometric function formula to give the following equation.
[Formula 56]

$$\frac{Mrz2}{m \cdot r^2 \cdot \omega^2} = \left[\frac{\varepsilon^2}{2} \cdot \cos 2\tau + \frac{3\varepsilon \cdot \xi}{8\lambda^3} \cdot \sin\tau + \frac{1}{32\lambda^3}\left(\frac{1}{\lambda} + \frac{1}{4\lambda^3} + \frac{3\xi^2}{2\lambda^3}\right)\right] \cdot \sin 2\omega t$$

$$- \left[\frac{\varepsilon^2}{2} \cdot \sin 2\tau + \frac{3\varepsilon \cdot \xi}{8\lambda^3} \cdot \cos\tau + \xi \cdot \cos\tau \cdot \left(\frac{1}{\lambda} + \frac{1}{4\lambda^3} + \frac{3\xi^2}{2\lambda^3}\right)\right] \cdot \cos 2\omega t \qquad (56)$$

Further tidying up the above equation of Formula 56 gives the following equation.
[Formula 57]

$$\frac{Mrz2}{m\cdot\tau^2\cdot\omega^2} = \left\{\left(\frac{\varepsilon^2}{2}\cdot\cos2\tau + \frac{3\varepsilon\cdot\xi}{8\lambda^3}\cdot\sin\tau + \left(\frac{1}{32\lambda^4} + \frac{1}{128\lambda^6} + \frac{3\xi^2}{64\lambda^6}\right)\right)^2 + \left(\frac{\varepsilon^2}{2}\cdot\sin2\tau + \frac{3\varepsilon\cdot\xi}{8\lambda^3}\cdot\cos\tau + \left(\frac{\xi}{\lambda} + \frac{\xi}{4\lambda^3} + \frac{3\xi^3}{2\lambda}\right)\right)^2\right\}$$

$$\cdot\sin\left(2\omega t - \tan^{-1}\left(\frac{\frac{\varepsilon^2}{2}\cdot\cos2\tau + \frac{3\varepsilon\cdot\xi}{8\lambda^3}\cdot\sin\tau + \left(\frac{1}{32\lambda^4} + \frac{1}{128\lambda^6} + \frac{3\xi^2}{64\lambda^6}\right)}{\frac{\varepsilon^2}{2}\cdot\sin2\tau + \frac{3\varepsilon\cdot\xi}{8\lambda^3}\cdot\cos\tau + \left(\frac{\xi}{\lambda} + \frac{\xi}{4\lambda^3} + \frac{3\xi^3}{2\lambda}\right)}\right)\right)$$

$$(57)$$

The symbols are defined as follows.
[Formula 58]

31

$$kM = \sqrt{\left(\frac{L^2}{2}\cdot\cos 2\tau + \frac{3\varepsilon\cdot\ell}{8\ell^3}\cdot\sin\tau + \left(\frac{1}{32\ell^4} + \frac{1}{128\ell^6} + \frac{3\varepsilon^2}{64\ell^8}\right)\right)^2 + \left(\frac{\ell^2}{2}\cdot\sin 2\tau + \frac{3\varepsilon\cdot\ell}{8\ell^3}\cdot\cos\tau + \left(\frac{\ell}{\ell} + \frac{\varepsilon\cdot\ell}{4\ell^3} + \frac{3\varepsilon^3}{2\ell^3}\right)\right)^2} \qquad (58)$$

[Formula 59]

EP 3 225 878 B1

[Formula 59]

$$\phi = -\tan^{-1}\left( \frac{\dfrac{\varepsilon^2}{2}\cdot\sin 2\tau + \dfrac{3\varepsilon\cdot\xi}{8\lambda^3}\cdot\cos\tau + \dfrac{\varepsilon^2}{2}\left(\dfrac{\xi}{\lambda} + \dfrac{3}{4\lambda^3} + \dfrac{3\xi^3}{2\lambda}\right)}{\dfrac{\varepsilon^2}{2}\cdot\cos 2\tau + \dfrac{3\varepsilon\cdot\xi}{8\lambda^3}\cdot\sin\tau + \left(1 + \dfrac{1}{32\lambda^4} + \dfrac{3\xi^2}{128\lambda^6} + \dfrac{64\lambda^6}{}\right)} \right) \quad (59)$$

Tidying up the above equation of Formula 57 using the above equations of Formulas 58 and 59 gives the following.

[Formula 60]

$$Mrz = kM \cdot mr^2\omega^2 \cdot \sin(2\omega t + \phi) \qquad (60)$$

The above equation of Formula 60 expresses the secondary inertia couple due to the lateral pressure from a

33

single piston generated as this single piston operates. In the engine 14, as the four pistons 32 operate, the secondary inertia couple due to the lateral pressures from the pistons is generated. That is, the secondary inertia couple generated in the engine 14 can be expressed by the following equation of Formula 61.

[Formula 61]

$$Mrz = 4kM \cdot mr^2 \omega^2 \cdot \sin(2\omega t + \phi) \qquad (61)$$

Next, the inertia forces generated as the balancer shafts 40 and 42 rotate will be described. In the following description, the x- and y-directions mean the x- and y-directions in FIG. 3.

The inertia force generated as the balancer shaft 40 rotates will be designated by Ua, and the inertia force generated as the balancer shaft 42 rotates will be designated by Ub. The components of these inertia forces Ua and Ub in the y-direction suitably satisfy the relationship illustrated by the equation of Formula 62 below. The magnitude of the unbalancing portion 40A of the balancer shaft 40 will be designated by kbA and the magnitude of the unbalancing portion 42A of the balancer shaft 42 will be designated by kbB.

[Formula 62]

$$U_{ay} + U_{by} = 4(k_{bA} + k_{bB}) \cdot mr\omega^2 \cdot \cos 2\omega t = -4 \cdot mr\omega^2 \cdot \left( \frac{r}{l} + \frac{r^3}{4l^3} + \frac{3r \cdot e^2}{2l^3} \right) \cdot \cos 2\omega t \qquad (62)$$

The position of the shaft center of the balancer shaft 40 will be designated by (xA,yA) and the position of the shaft center of the balancer shaft 42 will be designated by (xB,yB). The position of the shaft center of the crankshaft 30 forms the origin (0,0).

When the moments in the y-direction are in balance, the following equation of Formula 63 is established.
[Formula 63]

$$xA \cdot 4kbA \cdot mr\omega^2 + xB \cdot 4kbB \cdot mr\omega^2 = 4kM \cdot mr^2\omega^2 \cdot \sin\phi \quad (63)$$

Tidying up the above equation of Formula 63 gives the following equation of Formula 64.
[Formula 64]

$$xA \cdot kbA + xB \cdot kbB = kM \cdot r \cdot \sin\phi \quad (64)$$

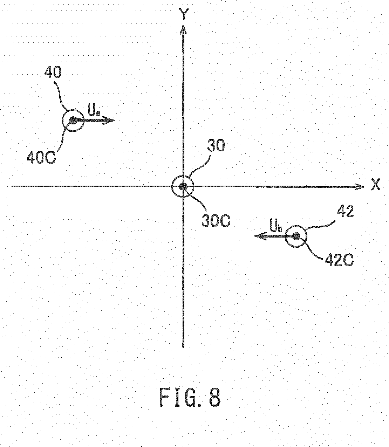

When the crankshaft 30 has rotated by 45° from the reference position ($\theta=0°$), if the inertia force Ua generated as the balancer shaft 40 rotates and the inertia force Ub generated as the balancer shaft 42 rotates are in the relationship illustrated by FIG. 8, the components of these inertia forces Ua and Ub in the x-direction suitably satisfy the relationship illustrated by the equation of Formula 65 below. For ease of explanation, the equation of Formula 65 below uses kb instead of kbA and kbB.

[Formula 65]

$$U\,a\,x = -U\,b\,x = 4\,k\,b \cdot m\,r\,\omega^{2} \cdot s\,i\,n\,2\,\omega\,t \qquad (6\,5)$$

If the moments in the x-direction are in balance, the following equation of Formula 66 is established.

[Formula 66]

$$yA \cdot 4kbA \cdot mr\omega^2 - yB \cdot 4kbB \cdot mr\omega^2 = 4kM \cdot mr^2\omega^2 \cdot \cos\phi \quad (66)$$

Tidying up the above equation of Formula 66 gives the following equation of Formula 67.
[Formula 67]

$$yA \cdot kbA - yB \cdot kbB = kM \cdot r \cdot \cos\phi \quad (67)$$

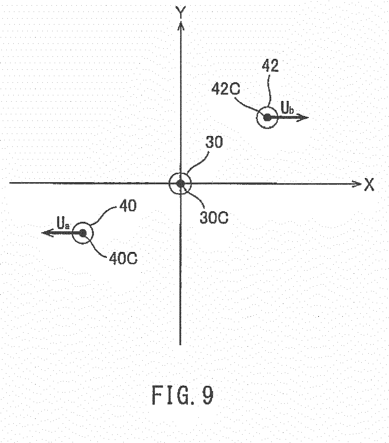

When the crankshaft 30 has rotated by 45° from the reference position ($\theta=0°$), if the inertia force Ua generated as the balancer shaft 40 rotates and the inertia force Ub generated as the balancer shaft 42 rotates are in the relationship illustrated by FIG. 9, the components of these inertia forces Ua and Ub in the x-direction suitably satisfy the relationship illustrated by the equation of Formula 68 below. For ease of explanation, the equation of Formula 68 below uses kb instead of kbA and kbB.

[Formula 68]

$$U a x = -U b x = -4 k b \cdot m r \omega^2 \cdot \sin 2 \omega t \qquad (68)$$

If the moments in the x-direction are in balance, the following equation of Formula 69 is established.

[Formula 69]

$$yB \cdot 4kbB \cdot mr\omega^2 - yA \cdot 4kbA \cdot mr\omega^2 = 4kM \cdot mr^2\omega^2 \cdot \cos\phi \qquad (69)$$

Tidying up the above equation of Formula 69 gives the following equation of Formula 70.
[Formula 70]

$$yB \cdot kbB - yA \cdot kbA = kM \cdot r \cdot \cos\phi \qquad (70)$$

As will be apparent from the above description, if the balancer shaft 40 rotates in the same direction as the crankshaft 30 and the balancer shaft 42 rotates in the direction opposite to that of the crankshaft 30, then, Step 2 may be performed by setting the parameters so as to satisfy the above equations of Formulas 64 and 67. If the balancer shaft 40 rotates in the direction opposite to that of the crankshaft 30 and the balancer shaft 42 rotates in the same direction as the crankshaft 30, then, Step 2 may be performed by setting the parameters so as to satisfy the equations of Formulas 64 and 70.

Next, settings for the balancer shafts 40 and 42 (Step 2) in the implementation shown in FIG. 8, i.e. if the balancer shaft 40 rotates in the same direction as the crankshaft 30 and the balancer shaft 42 rotates in the direction opposite to that of the crankshaft 30, will be described in detail with references to the above equations of Formulas 64 and 67.

First, an implementation will be described where the magnitude kbA of the unbalancing portion 40A of the balancer shaft 40 and the magnitude kbB of the unbalancing portion 42A of the balancer shaft 42 are the same. In this implementation, both the magnitude of the unbalancing portion 40A and the magnitude of the unbalancing portion 42A will be designated by kb. Then, the following equation of Formula 71 may be derived from the above equation of Formula 64.

[Formula 71]

$$x A + x B = \frac{kM \cdot r \cdot \sin\phi}{k b} \qquad (71)$$

In an offset engine, the piston reaches the top dead center after the crankpin has reached its reference position. As such, $\varphi$ has a negative value, as shown in the above equation of Formula 59. In this implementation, $\sin\varphi < 0$, and thus the right side of the above equation of Formula 71 has a negative value. This means that the distance between the shaft center 40C of the balancer shaft 40 and the reference line L1 as measured in the x-direction (i.e. absolute value of xA) is larger than the distance between the shaft center 42C of the balancer shaft 42 and the reference line L1 as measured in the x-direction (i.e. absolute value of xB).

If the balancer shaft 40 rotates in the same direction as the crankshaft 30 and the balancer shaft 42 rotates in the direction opposite to that of the crankshaft 30, when the crankshaft 30 has rotated by 45° from its reference position ($\theta = 0°$), the inertia force Ua generated as the balancer shaft 40 rotates and the inertia force Ub generated as the balancer shaft 42 rotates are in opposite directions toward each other, as shown in FIG. 8. That is, the inertia force Ua acts in the x-direction away from the balancer shaft 40 toward the balancer shaft 42, while the inertia force Ub acts in the x-direction away from the balancer shaft 42 toward the balancer shaft 40. In this implementation, as shown in FIG. 8, the balancer shaft 40 is located higher than the crankshaft 30, while the balancer shaft 42 is located lower than the crankshaft 30. That is, the balancer shaft 40 that rotates in the same direction as the crankshaft 30 is located higher than the crankshaft 30.

Further, if both the magnitude of the unbalancing portion 40A and the magnitude of the unbalancing portion 42A are designated by kb, then, the following equation of Formula 72 may be derived from the above equation of Formula 67.

[Formula 72]

$$y A - y B = \frac{kM \cdot r \cdot \cos\phi}{k b} \qquad (72)$$

As discussed above, in an offset engine, $\varphi$ has a negative value. Since $\varphi$ is in the range of -90° to 90°, $\cos\varphi > 0$. The right side of the above equation of Formula 72 has a positive value. The above equation of Formula 72 indicates the distance between the shaft center 40C of the balancer shaft 40 and the shaft center 42C of the balancer shaft 42 as measured in the y-direction.

If the balancer shaft 40 rotates in the same direction as the crankshaft 30 and the balancer shaft 42 rotates in the direction opposite to that of the crankshaft 30 and if the magnitude kbA of the unbalancing portion 40A of the balancer shaft 40 and the magnitude kbB of the unbalancing portion 42A of the balancer shaft 42 are the same, then, Step 2 may be performed by positioning the balancer shafts 40 and 42 so as to satisfy the above equations of Formulas 71 and 72. Then, the balancer mechanism 14B will reduce vibration caused by the secondary inertia couple due to the lateral pressures from the pistons even though the phase of the secondary inertia couple caused by the lateral pressures from the pistons is displaced.

Next, an implementation will be described where the distance between the shaft center 40C of the balancer shaft 40 and the shaft center 30C of the crankshaft 30 is equal to the distance between the shaft center 42C of the balancer shaft 42 and the shaft center 30C of the crankshaft 30. In this implementation, the conditions illustrated by the equations of Formulas 73 and 74 below are established.

[Formula 73]

$$x_A = -x_B \qquad (73)$$

[Formula 74]

$$y_B = -y_A \qquad (74)$$

Tidying up the equation of Formula 64 using the equation of Formula 73 gives the following equation of Formula 75.

[Formula 75]

$$k_{bB} - k_{bA} = \frac{k_M \cdot r \cdot \sin\phi}{x_B} \qquad (75)$$

As discussed above, in an offset engine, $\varphi$ has a negative value. In this case, $\sin\varphi < 0$. Further, $x_B > 0$. As such, the right side of the above equation of Formula 75 has a negative value. That is, $k_{bA}$ is larger than $k_{bB}$.

Tidying up the equation of Formula 67 using the equation of Formula 74 gives the following equation of Formula 76.

[Formula 76]

$$k_{bA} + k_{bB} = \frac{k_M \cdot r \cdot \cos\phi}{y_A} \qquad (76)$$

As discussed above, in an offset engine, $\varphi$ has a negative value. Since $\varphi$ is in the range of -90° to 90°, $\cos\varphi > 0$. Further, $y_A > 0$. In this case, the right side of the above equation of Formula 76 has a positive value.

If the balancer shaft 40 rotates in the same direction as the crankshaft 30 and the balancer shaft 42 rotates in the direction opposite to that of the crankshaft 30 and if the distance between the shaft center 40C of the balancer shaft 40 and the shaft center 30C of the crankshaft 30 is equal to the distance between the shaft center 42C of the balancer shaft 42 and the shaft center 30C of the crankshaft 30, then, Step 2 may be performed by positioning the balancer shafts 40 and 42 so as to satisfy the above equations of Formulas 73 and 76. Then, the balancer mechanism 14B will reduce vibration caused by the secondary inertia couple due to the lateral pressures from the pistons even though the phase of the secondary inertia couple caused by the lateral pressures from the pistons is displaced.

If the balancer shafts 40 and 42 are positioned so as to satisfy the above equations of Formulas 73 to 76, the inertia force generated as the balancer shaft 40 rotates and the inertia force generated as the balancer shaft 42 rotates are not in balance in the x-direction. Accordingly, for example, if the motorcycle includes an auxiliary device such as an oil pump or water pump that rotates at a speed twice that of the crankshaft 30, an additional unbalancing portion may be provided on their shaft to balance the inertia forces in the x-direction.

Next, settings for the balancer shafts 40 and 42 (Step 2) in the implementation shown in FIG. 9, i.e. if the balancer shaft 40 rotates in the direction opposite to that of the crankshaft 30 and the balancer shaft 42 rotates in the same direction as the crankshaft 30 will be described in detail with reference to the above equations of Formulas 64 and 70.

If the magnitude kbA of the unbalancing portion 40A of the balancer shaft 40 and the magnitude kbB of the unbalancing portion 42A of the balancer shaft 42 are the same, then, the relationship between xA and xB satisfies the above equation of Formula 71, as in implementations where the balancer shaft 40 rotates in the same direction as the crankshaft 30 and the balancer shaft 42 rotates in the direction opposite to that of the crankshaft 30. Accordingly, the description for deriving the equation of Formula 71 will not be repeated.

If the balancer shaft 40 rotates in the direction opposite to that of the crankshaft 30 and the balancer shaft 42 rotates in the same direction as the crankshaft 30, when the crankshaft 30 has rotated by 45° from its reference position ($\theta=0°$), the inertia force Ua generated as the balancer shaft 40 rotates and the inertia force Ub generated as the balancer first 42 rotates are in opposite directions away from each other, as shown in FIG. 9. That is, the inertia force Ua acts in the x-direction away from the balancer shaft 42 toward the balancer shaft 40, while the inertia force Ub acts in the x-direction away from the balancer shaft 40 toward the balancer shaft 42. In this implementation, as shown in FIG. 9, the balancer shaft 40 is located lower than the crankshaft 30, while the balancer shaft 42 is located higher than the crankshaft 30. That is, the balancer shaft 42 that rotates in the same direction as the crankshaft 30 is located higher than the crankshaft 30.

If both the magnitude of the unbalancing portion 40A and the magnitude of the unbalancing portion 42A are designated by kb, the following equation of Formula 77 can be derived from the above equation of Formula 70.

[Formula 77]

$$yB - yA = \frac{kM \cdot r \cdot \cos\phi}{kb} \qquad (77)$$

As discussed above, in an offset engine, $\varphi$ has a negative value. Since $\varphi$ is in the range of -90° to 90°, $\cos\varphi > 0$. In this case, the right side of the above equation of Formula 77 has a positive value. The above equation of Formula 77 indicates the distance between the shaft center 40C of the balancer shaft 40 and the shaft center 42C of the balancer shaft 42 as measured in the y-direction.

If the balancer shaft 40 rotates in the direction opposite to that of the crankshaft 30 and the balancer shaft 42 rotates in the same direction as the crankshaft 30 and if the magnitude kbA of the unbalancing portion 40A of the balancer shaft 40 and the magnitude kbB of the unbalancing portion 42A of the balancer shaft 42 are the same, then, Step 2 may be performed by positioning the balancer shafts 40 and 42 so as to satisfy the above equations of Formulas 71 and 72. Then, the balancer mechanism 14B will reduce vibration caused by the secondary inertia couple due to the lateral pressures from the pistons even though the phase of the secondary inertia couple caused by the lateral pressures from the pistons is displaced.

Next, an implementation where the distance between the shaft center 40C of the balancer shaft 40 and the shaft center 30C of the crankshaft 30 is equal to the distance between the shaft center 42C of the balancer shaft 42 and the shaft center 30C of the crankshaft 30 will be described. In this implementation, the conditions indicated by the above equations of Formulas 73 and 74 are established.

Tidying up the equation of Formula 64 using the equation of Formula 73 gives the above equation of Formula 75. That is, kbA is larger than kbB, as in implementations where the balancer shaft 40 rotates in the same direction as the crankshaft 30 and the balancer shaft 42 rotates in the direction opposite to the crankshaft 30 and if the distance between the shaft center 40C of the balancer shaft 40 and the shaft center 30C of the crankshaft 30 is equal to the distance between the shaft center 42C of the balancer shaft 42 and the shaft center 30C of the crankshaft 30.

Tidying up the equation of Formula 70 using the equation of Formula 74 gives the following equation of Formula 78.

[Formula 78]

$$kbB + kbA = -\frac{kM \cdot r \cdot \cos\phi}{yA} \qquad (78)$$

As discussed above, in an offset engine, φ has a negative value. Since φ is in the range of -90° to 90°, cosφ>0. Further, yA<0. In this case, the right side of the above equation of Formula 78 has a positive value.

If the balancer shaft 40 rotates in the direction opposite to that of the crankshaft 30 and the balancer shaft 42 rotates in the same direction as the crankshaft 30 and if the distance between the shaft center 40C of the balancer shaft 40 and the shaft center 30C of the crankshaft 30 is equal to the distance between the shaft center 42C of the balancer shaft 42 and the shaft center 30C of the crankshaft 30, then, Step 2 may be performed by positioning the balancer shafts 40 and 42 so as to satisfy the above equations of Formulas 73 to 75 and 78. Then, the balancer mechanism 14B will reduce vibration caused by the secondary inertia couple due to the lateral pressures from the pistons even though the phase of the secondary inertia couple caused by the lateral pressures from the pistons is displaced.

If the balancer shafts 40 and 42 are positioned so as to satisfy the above equations of Formulas 73 to 75 and 78, the inertia force generated as the balancer shaft 40 rotates and the inertia force generated as the balancer shaft 42 rotates are not in balance in the x-direction. Accordingly, for example, if the motorcycle includes an auxiliary device such as an oil pump or water pump that rotates at a speed twice that of the crankshaft 30, an additional unbalancing portion may be provided on their shaft to balance the inertia forces in the x-direction.

For example, the pistons 32 may have different offset quantities.

The above embodiment describes implementations where the distance between the shaft center 40C of the balancer shaft 40 and the shaft center 30C of the crankshaft 30 as measured in the x-direction is equal to the distance between the shaft center 42C of the balancer shaft 42 and the shaft center 30C of the crankshaft 30 as measured in the x-direction by describing example implementations where the distance between the shaft center 40C of the balancer shaft 40 and the shaft center 30C of the crankshaft 30 as measured in the y-direction is equal to the distance between the shaft center 42C of the balancer shaft 42 and the shaft center 30C of the crankshaft 30 as measured in the y-direction; alternatively, the distance between the shaft center 40C of the balancer shaft 40 and the shaft center 30C of the crankshaft 30 as measured in the y-direction may be different from the distance between the shaft center 42C of the balancer shaft 42 and the shaft center 30C of the crankshaft 30 as measured in the y-direction.

**Claims**

1. An in-line four cylinder engine (14), comprising:

   a motion conversion mechanism (14A); and
   a balancer mechanism (14B) for reducing vibration generated as the motion conversion mechanism (14A) operates,
   wherein the motion conversion mechanism (14A) includes:

   a crankshaft (30);
   four pistons (32) each located within an associated one of four cylinders (36) arranged in an axial direction of the crankshaft (30); and
   four connecting rods (34) each swingably connected to an associated one of the four pistons (32) and swingably connected to the crankshaft (30),
   the crankshaft (30) includes four crankpins (38) each mounted on an associated one of the four connecting rods (34),
   in the motion conversion mechanism (14A),
   the four cylinders (36) have cylinder axes (36L) that are parallel to each other,
   when two crankpins (38A and 38D) of the four crankpins (38) located at ends of a series of crankpins arranged in the axial direction of the crankshaft (30) are at predetermined reference positions, the other two crankpins (38B and 38C) are located on that side of a shaft center (30C) of the crankshaft (30) which is opposite to a side with the reference positions,
   as viewed in the axial direction of the crankshaft (30), the shaft center (30C) of the crankshaft (30) is not located on the cylinder axes (36L) of the four cylinders (36),
   for each of the four pistons (32), an angle of rotation of the crankshaft (30) found when the piston (32) moves from a top dead center to a bottom dead center is larger than an angle of rotation of the crankshaft (30) found when the piston (32) moves from the bottom dead center to the top dead center,
   wherein each of the crankpins (38) is inserted into a hole formed in the associated connecting rod (34),
   and **characterized in that** it further comprises a balancer mechanism (14B) including:

   a first balancer shaft (40) positioned parallel to the crankshaft (30) and capable of rotating at a speed twice that at which the crankshaft (30) rotates; and

a second balancer shaft (42) positioned parallel to the crankshaft (30) and capable of rotating at a speed twice that at which the crankshaft (30) rotates in a direction opposite to that in which the first balancer shaft (40) rotates,

a reference line (L1) is established that passes through the shaft center (30C) of the crankshaft (30) and is parallel to the cylinder axes (36L) of the four cylinders (36) as viewed in the axial direction of the crankshaft (30),

as viewed in the axial direction of the crankshaft (30), the first balancer shaft (40) is located on a side of the reference line (L1) which is opposite to a side with the second balancer shaft (42) at a position different from that of the second balancer shaft (42) as measured in a direction in which the reference line (L1) extends,

the first balancer shaft (40) includes a first unbalancing portion (40A) for generating an inertia force as the first balancer shaft (40) rotates,

the second balancer shaft (42) includes a second unbalancing portion (42A) for generating an inertia force as the second balancer shaft (42) rotates,

and wherein at least one of the following (1) and (2) applies:

> (1) a distance between a shaft center (40C) of the first balancer shaft (40) and the reference line (L1) as measured in a second direction is different from a distance between a shaft center (42C) of the second balancer shaft (42) and the reference line (L1) as measured in the second direction so as to reduce vibration generated by a secondary component of an inertia couple based on lateral pressures from the four pistons (32), and
> (2) a magnitude of the first unbalancing portion (40A) is different from a magnitude of the second unbalancing portion (42A) so as to reduce vibration generated by a secondary component of an inertia couple based on lateral pressures from the four pistons (32),

where a first direction is the direction in which the reference line (L1) extends as viewed in the axial direction of the crankshaft (30), and the second direction is a direction perpendicular to the first direction.

2. An in-line four cylinder engine (14) according to claim 1, wherein the distance between the shaft center (40C) of the first balancer shaft (40) and the reference line (L1) as measured in the second direction is different from the distance between the shaft center (42C) of the second balancer shaft (42) and the reference line (L1) as measured in the second direction.

3. An in-line four cylinder engine (14) according to claim 2, wherein:

the magnitude of the first unbalancing portion (40A) is the same as the magnitude of the second unbalancing portion (42A),

one of the first and second balancer shafts (40, 42) is located on that side of the reference line (L1) which is opposite to a side with cylinder axes (36L) of the four cylinders (36), and the other balancer shafts (40, 42) is located on the same side of the reference line (L1) on which the cylinder axes (36L) of the four cylinders (36) are located, and,

as viewed in the axial direction of the crankshaft (30), the distance between the shaft center (40C, 42C) of the other balancer shaft (40, 42) and the reference line (L1) as measured in the second direction is larger than the distance between the shaft center (40C, 42C) of the one balancer shaft (40, 42) and the reference line (L1) as measured in the second direction.

4. An in-line four cylinder engine (14) according to claim 1, wherein the magnitude of the first unbalancing portion (40A) is different from the magnitude of the second unbalancing portion (42A).

5. An in-line four cylinder engine (14) according to any one of claims 1 to 4, wherein:

one of the first and second balancer shafts (40, 42) rotates in the same direction in which the crankshaft (30) rotates while the other balancer shaft (40, 42) rotates in a direction opposite to that in which the crankshaft (30) rotates, and,

as viewed in the axial direction of the crankshaft (30), the one balancer shaft (40, 42) is located closer to the four pistons (32) than the other balancer shaft (40, 42) is as measured in the first direction.

6. An in-line four cylinder engine (14) according to any one of claims 1 to 5, wherein, as viewed in the axial direction of the crankshaft (30), distances (D1) between the shaft center (30C) of the crankshaft (30) and the cylinder axes (36L) of the four cylinders (36) as measured in the second direction are equal to each other.

7. A straddled vehicle comprising the in-line four cylinder engine (14) according to any one of claims 1 to 6.

**Patentansprüche**

1. Vierzylinder-Reihenmotor (14), der umfasst:

einen Bewegungsumwandlungs-Mechanismus (14A); sowie
einen Ausgleichs-Mechanismus (14B) zum Reduzieren von Vibration, die erzeugt wird, wenn der Bewegungsumwandlungs-Mechanismus (14A) arbeitet,
wobei der Bewegungsumwandlungs-Mechanismus (14A) enthält:

eine Kurbelwelle (30);
vier Kolben (32), die sich jeweils im Inneren eines zugehörigen von vier Zylindern (36) befinden, die in einer axialen Richtung der Kurbelwelle (30) angeordnet sind; sowie
vier Pleuelstangen (34), die jeweils schwenkbar mit einem zugehörigen der vier Kolben (32) verbunden und schwenkbar mit der Kurbelwelle (30) verbunden sind,
wobei die Kurbelwelle (30) vier Kurbelzapfen (38) enthält, die jeweils an einer zugehörigen der vier Pleuelstangen (34) in dem Bewegungsumwandlungs-Mechanismus (14A) angebracht sind,
die vier Zylinder (36) Zylinderachsen (36L) haben, die parallel zueinander sind,
wenn zwei Kurbelzapfen (38A und 38D) der vier Kurbelzapfen (38), die sich an Enden einer Reihe von Kurbelzapfen befinden, die in der axialen Richtung der Kurbelwelle (30) angeordnet sind, vorgegebene Bezugspositionen einnehmen, sich die anderen zwei Kurbelzapfen (38B und 38C) an derjenigen Seite einer Wellenmitte (30C) der Kurbelwelle (30) befinden, die einer Seite mit den Bezugspositionen gegenüberliegt,
die Wellenmitte (30C) der Kurbelwelle (30), in der axialen Richtung der Kurbelwelle (30) gesehen, sich nicht auf den Zylinderachsen (36L) der vier Zylinder (36) befindet,
für jeden der vier Kolben (32) ein Drehwinkel der Kurbelwelle (30), der auftritt, wenn sich der Kolben (32) von einem oberen Totpunkt zu einem unteren Totpunkt bewegt, größer ist als ein Drehwinkel der Kurbelwelle (30), der auftritt, wenn sich der Kolben (32) von dem unteren Totpunkt zu dem oberen Totpunkt bewegt,
jeder der Kurbelzapfen (38) in ein Loch eingeführt ist, das in der zugehörigen Pleuelstange (34) ausgebildet ist, und **dadurch gekennzeichnet, dass** sie des Weiteren einen Ausgleichs-Mechanismus (14B) umfasst, der enthält:

eine erste Ausgleichswelle (40), die parallel zu der Kurbelwelle (30) positioniert ist und sich mit einer Geschwindigkeit drehen kann, die doppelt so hoch ist wie diejenige, mit der sich die Kurbelwelle (30) dreht; sowie
eine zweite Ausgleichswelle (42), die parallel zu der Kurbelwelle (30) positioniert ist und sich mit einer Geschwindigkeit, die doppelt so hoch ist wie die, mit der sich die Kurbelwelle (30) dreht, in einer Richtung drehen kann, die entgegengesetzt zu derjenigen ist, in der sich die erste Ausgleichswelle (40) dreht,
eine Bezugslinie (L1) vorhanden ist, die durch die Wellenmitte (30C) der Kurbelwelle (30) verläuft und, in der axialen Richtung der Kurbelwelle (30) gesehen, parallel zu den Zylinderachsen (36L) der vier Zylinder (36) ist,
die erste Ausgleichswelle (40) sich an einer Seite der Bezugslinie (L1), die, in der axialen Richtung der Kurbelwelle (30) gesehen, einer Seite mit der zweiten Ausgleichswelle (42) gegenüberliegt, an einer Position befindet, die sich, gemessen in einer Richtung, in der die Bezugslinie (L1) verläuft, von derjenigen der zweiten Ausgleichswelle (42) unterscheidet,
die erste Ausgleichswelle (40) einen ersten Unwucht-Abschnitt (40A) enthält, mit dem eine Trägheitskraft erzeugt wird, wenn sich die erste Ausgleichswelle (40) dreht,
die zweite Ausgleichswelle (42) einen zweiten Unwucht-Abschnitt (42A) enthält, mit dem eine Trägheitskraft erzeugt wird, wenn sich die zweite Ausgleichswelle (42) dreht,
und wobei wenigstens eine der folgenden Bedingungen (1) und (2) gilt:

(1) ein Abstand zwischen einer Wellenmitte (40C) der ersten Ausgleichswelle (40) und der Bezugslinie (L1), gemessen in einer zweiten Richtung, sich von einem Abstand zwischen einer Wellenmitte (42C) der zweiten Ausgleichswelle (42) und der Bezugslinie (L1), gemessen in der zweiten Richtung, unterscheidet, um so Vibration zu reduzieren, die durch eine sekundäre Komponente eines Trägheitspaars (inertia couple) auf Basis seitlicher Drücke von den vier Kolben (32) erzeugt wird, und

(2) eine Größe des ersten Unwucht-Abschnitts (40A) sich von einer Größe des zweiten Unwucht-Abschnitts (42A) unterscheidet, um so Vibration zu reduzieren, die durch eine sekundäre Komponente eines Trägheitspaars auf Basis seitlicher Drücke von den vier Kolben (32) erzeugt wird,

wobei eine erste Richtung die Richtung ist, in der die Bezugslinie (L1), in der axialen Richtung der Kurbelwelle (30) gesehen, verläuft, und die zweite Richtung eine Richtung senkrecht zu der ersten Richtung ist.

2. Vierzylinder-Reihenmotor (14) nach Anspruch 1, wobei sich der Abstand zwischen der Wellenmitte (40C) der ersten Ausgleichswelle (40) und der Bezugslinie (L1), gemessen in der zweiten Richtung, von dem Abstand zwischen der Wellenmitte (42C) der zweiten Ausgleichswelle (42) und der Bezugslinie (L1), gemessen in der zweiten Richtung, unterscheidet.

3. Vierzylinder-Reihenmotor (14) nach Anspruch 2, wobei:

die Größe des ersten Unwucht-Abschnitts (40A) die gleiche ist wie die Größe des zweiten Unwucht-Abschnitts (42A),
eine von der ersten und der zweiten Ausgleichswelle (40, 42) sich an derjenigen Seite der Bezugslinie (L1) befindet, die einer Seite mit Zylinderachsen (36L) der vier Zylinder (36) gegenüberliegt, und die andere von den Ausgleichswellen (40, 42) sich an der gleichen Seite der Bezugslinie (L1) befindet, an der sich die Zylinderachsen (36L) der vier Zylinder befinden, und
der Abstand zwischen der Wellenmitte (40C, 42C) der anderen Ausgleichswelle (40, 42) und der Bezugslinie (L1), gemessen in der zweiten Richtung, in der axialen Richtung der Kurbelwelle (30) gesehen, größer ist als der Abstand zwischen der Wellenmitte (40C, 42C) der einen Ausgleichswelle (40, 42) und der Bezugslinie (L1), gemessen in der zweiten Richtung.

4. Vierzylinder-Reihenmotor (14) nach Anspruch 1, wobei sich die Größe des ersten Unwucht-Abschnitts (40A) von der Größe des zweiten Unwucht-Abschnitts (42A) unterscheidet.

5. Vierzylinder-Reihenmotor (14) nach einem der Ansprüche 1 bis 4, wobei:

die erste oder die zweite Ausgleichswelle (40, 42) sich in der gleichen Richtung dreht, in der sich die Kurbelwelle (30) dreht, während die andere Ausgleichswelle (40, 42) sich in einer Richtung entgegengesetzt zu derjenigen dreht, in der sich die Kurbelwelle (30) dreht, und
die eine Ausgleichswelle (40, 42) sich, in der axialen Richtung der Kurbelwelle (30) gesehen, gemessen in der ersten Richtung, näher an den vier Kolben (32) befindet als die andere Ausgleichswelle (40, 42).

6. Vierzylinder-Reihenmotor (14) nach einem der Ansprüche 1 bis 5, wobei, in der axialen Richtung der Kurbelwelle (30) gesehen, Abstände (D1) zwischen der Wellenmitte (30C) der Kurbelwelle (30) und den Zylinderachsen (36L) der vier Zylinder (36), gemessen in der zweiten Richtung, einander gleich sind.

7. Spreizsitz-Fahrzeug, das den Vierzylinder-Reihenmotor (14) nach einem der Ansprüche 1 bis 6 umfasst.

**Revendications**

1. Moteur thermique à quatre cylindres en ligne (14) comprenant :

un mécanisme de conversion de mouvement (14A), et
un mécanisme d'équilibrage (14B) destiné à réduire les vibrations générées lorsque le mécanisme de conversion de mouvement (14A) fonctionne,
dans lequel le mécanisme de conversion de mouvement (14A) inclut :

un vilebrequin (30),

quatre pistons (32) situés chacun dans l'un associé des quatre cylindres (36) disposés dans la direction axiale du vilebrequin (30), et

quatre bielles (34) reliées chacune tout en pouvant osciller à l'un associé des quatre pistons (32) et reliées tout en pouvant osciller au vilebrequin (30),

le vilebrequin (30) incluant quatre manetons (38) montés chacun sur l'une associée des quatre bielles (34), dans le mécanisme de conversion de mouvement (14A),

les quatre cylindres (36) présentent des axes de cylindre (36L) parallèles l'un à l'autre,

lorsque deux manetons (38A et 38D) parmi les quatre manetons de vilebrequin (38), situés aux extrémités d'une série de manetons disposés dans la direction axiale du vilebrequin (30), se trouvent à des positions de référence prédéterminées, les deux autres manetons (38B et 38C) sont situés sur le côté du centre d'arbre (30C) du vilebrequin (30) qui est opposé au côté avec les positions de référence,

comme on peut le voir dans la direction axiale du vilebrequin (30), le centre d'arbre (30C) du vilebrequin (30) n'est pas situé sur les axes de cylindre (36L) des quatre cylindres (36),

pour chacun des quatre pistons (32), l'angle de rotation du vilebrequin (30) trouvé lorsque le piston (32) se déplace du point mort haut au point mort bas est plus grand que l'angle de rotation du vilebrequin (30) trouvé lorsque le piston (32) se déplace du point mort bas au point mort haut,

dans lequel chacun des manetons (38) est inséré dans un alésage formé dans la bielle (34) associée, et est **caractérisé en ce qu'**il comprend en outre un mécanisme d'équilibrage (14B) incluant :

un premier arbre d'équilibrage (40) positionné pour être parallèle au vilebrequin (30) et pouvant tourner à une vitesse double de celle avec laquelle tourne le vilebrequin (30), et

un second arbre d'équilibrage (42) positionné pour être parallèle au vilebrequin (30) et pouvant tourner à une vitesse double de celle avec laquelle tourne le vilebrequin (30) dans le sens opposé à celui dans lequel tourne le premier arbre d'équilibrage (40),

une droite de référence (L1) est établie, laquelle passe au travers du centre d'arbre (30C) du vilebrequin (30) et est parallèle aux axes de cylindre (36L) des quatre cylindres (36) comme on peut le voir dans la direction axiale du vilebrequin (30),

comme on peut le voir dans la direction axiale du vilebrequin (30), le premier arbre d'équilibrage (40) est situé sur un côté de la droite de référence (L1) qui est opposé au côté comportant le second arbre d'équilibrage (42) à une position différente de celle du second arbre d'équilibrage (42) comme on peut le mesurer dans la direction dans laquelle s'étend la droite de référence (L1),

le premier arbre d'équilibrage (40) inclut un premier organe de déséquilibrage (40A) destiné à générer une force d'inertie lorsque tourne le premier arbre d'équilibrage (40),

le second arbre d'équilibrage (42) inclut un second organe de déséquilibrage (42A) destiné à générer une force d'inertie lorsque tourne le second arbre d'équilibrage (42), et dans lequel

au moins l'une des conditions suivantes (1) et (2) s'applique :

(1) la distance entre le centre d'arbre (40C) du premier arbre d'équilibrage (40) et la droite de référence (L1), mesurée dans une seconde direction, est différente de la distance entre le centre d'arbre (42C) du second arbre d'équilibrage (42) et la droite de référence (L1) mesurée dans la seconde direction de sorte à réduire les vibrations générées par une composante secondaire d'un couple d'inertie, fondée sur les pressions latérales provenant des quatre pistons (32), et

(2) l'amplitude du premier organe de déséquilibrage (40A) est différente de l'amplitude du second organe de déséquilibrage (42A) de sorte à réduire les vibrations générées par une composante secondaire d'un couple d'inertie, fondée sur les pressions latérales provenant des quatre pistons (32),

où la première direction est la direction dans laquelle s'étend la droite de référence (L1) comme on peut le voir dans la direction axiale du vilebrequin (30) et où la seconde direction est une direction perpendiculaire à la première direction.

2. Moteur thermique à quatre cylindres en ligne (14) selon la revendication 1, dans lequel la distance entre le centre d'arbre (40C) du premier arbre d'équilibrage (40) et la droite de référence (L1) telle qu'elle est mesurée dans la seconde direction est différente de la distance entre le centre d'arbre (42C) du second arbre d'équilibrage (42) et la droite de référence (L1) telle qu'elle est mesurée dans la seconde direction.

3. Moteur thermique à quatre cylindres en ligne (14) selon la revendication 2, dans lequel :

l'amplitude du premier organe de déséquilibrage (40A) est identique à l'amplitude du second organe de déséquilibrage (42A),

l'un des premier et second arbres d'équilibrage (40, 42) est situé sur le côté de la droite de référence (L1) qui est opposé au côté comportant les axes de cylindres (36L) des quatre cylindres (36), et l'autre arbre d'équilibrage (40, 42) est situé sur le même côté de la droite de référence (L1) sur lequel sont situés les axes de cylindre (36L) des quatre cylindres (36), et

comme on peut le voir dans la direction axiale du vilebrequin (30), la distance entre le centre d'arbre (40C, 42C) de l'autre arbre d'équilibrage (40, 42) et la droite de référence (L1) telle qu'elle est mesurée dans la seconde direction est plus grande que la distance entre le centre d'arbre (40C, 42C) du premier arbre d'équilibrage (40, 42) et la droite de référence (L1) telle qu'elle est mesurée dans la seconde direction.

4. Moteur thermique à quatre cylindres en ligne (14) selon la revendication 1, dans lequel l'amplitude du premier organe de déséquilibrage (40A) est différente de l'amplitude du second organe de déséquilibrage (42A).

5. Moteur thermique à quatre cylindres en ligne (14) selon l'une quelconque des revendications 1 à 4, dans lequel :

l'un des premier et second arbres d'équilibrage (40, 42) tourne dans le même sens dans lequel tourne le vilebrequin (30) alors que l'autre arbre d'équilibrage (40, 42) tourne dans le sens opposé à celui dans lequel tourne le vilebrequin (30), et

comme on peut le voir dans la direction axiale du vilebrequin (30), le premier arbre d'équilibrage (40, 42) est plus proche des quatre pistons (32) que ne l'est l'autre arbre d'équilibrage (40, 42) tel que mesuré dans la première direction.

6. Moteur thermique à quatre cylindres en ligne (14) selon l'une quelconque des revendications 1 à 5, dans lequel, comme on peut le voir dans la direction axiale du vilebrequin (30), les distances (D1) entre le centre d'arbre (30C) du vilebrequin (30) et les axes de cylindre (36L) des quatre cylindres (36) telles que mesurées dans la seconde direction sont égales.

7. Véhicule à selle comprenant le moteur thermique à quatre cylindres en ligne (14) conforme à l'une quelconque des revendications 1 à 6.

FIG. 1

FIG. 2

FIG. 3

FIG. 4

EP 3 225 878 B1

FIG. 5

54

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1811199 A1
- JP S567536 A
- EP 0284430 A2